# EUROPEAN PATENT APPLICATION

(11) **EP 4 560 234 A1**
(43) Date of publication of application: **28.05.2025**
(21) Application number: 24208337.6
(22) Date of filing: 23.10.2024
(51) Int. Cl.: F25D 29/00, G03B 17/02, G03B 17/56, G03B 29/00, H01R 13/627, F25D 23/02, F25D 23/06

(54) **HOUSEHOLD APPLIANCE COMPRISING A CAMERA ARRANGED ON A SUPPORT PART BY A SNAP-FIT CONNECTION, AS WELL AS MOUNTING METHOD**

(30) Priority: 21.11.2023 CN 202311560333
(71) Applicant: BSH Hausgeräte GmbH, 81739 München (DE)
(72) Inventor: Schäferling, Joachim, 86657 Bissingen (DE); Kempfle, Stephan, 89352 Ellzee (DE); Rodney, Christopher, 86637 Villenbach (DE); Bihr, Daniel, 73467 Kirchheim am Ries (DE); Hou, Yingfeng, Nanjing, 210046 (CN)

(57) **Abstract**

An aspect of the invention relates to a household appliance (1), comprising a housing (1b), in which at least one receiving space (1c) for food is configured, with a door (1e), which is movably arranged on the housing (1b), and comprising a camera (3), wherein the camera (3) comprises a camera housing (4, 5, 6), and comprising a support part (7), which comprises a mounting socket (8), which is connected to the camera housing (4, 5, 6) by a snap-fit connection (20, 21), characterized in that the mounting socket (8) on an outer side (10a, 15a) comprises at least one snap-fit element (11, 12) and the camera housing (4, 5, 6) on an inner side (16a, 18a) comprises a counter-snap element (17, 19), wherein in the mounted state the mounting socket (8) is received in the camera housing (4, 5, 6) and the snap-fit element (11, 12) for creating the snap-fit connection (20, 21) is snap-fitted with the counter-snap element (17, 19). One aspect also relates to a method.

## Description

One aspect of the invention relates to a household appliance comprising a housing, in which at least one receiving space for food is configured. The household appliance moreover comprises a door, which is movably arranged on the housing. Moreover, the household appliance comprises a camera. Same may be arranged on an inner side of the door. A further aspect of the invention relates to a method for mounting a camera for a household appliance.

From document DE 10 2013 211 099 A1 a household cooling appliance is known. There a camera module is provided, which may also comprise a lighting device.

Moreover, from document EP 2 975 343 A1 a cooling appliance is known. On an inner side of the door there is a camera arranged. Equally, thereby a lighting unit is arranged on the inner side of the door.

In the case of modern household appliances, such as for instance a household cooling appliance, it is known that at least one camera is present, by which a receiving space for food may be captured. In the case of household cooling appliances it is known that such a camera is arranged on a wall of an inner liner bounding the receiving space. Since especially in the case of household cooling appliances a thermal insulation between the inner liner and the outer housing of the household cooling appliance is required, such fastening is more difficult. In order to facilitate this, in addition to a camera a support part is used. This is usually arranged in a clearance between the inner liner and the outer housing. The support part is thus arranged in particular on the side of the foam. This means that it is arranged in the clearance between the inner liner and the outer housing, into which thermally insulating foam is inserted.

Such design is for instance known from the DE 10 2013 216 767 A1. Such a support part is snap-fitted in a recess of a wall of the inner liner. Moreover, there a carrier for a camera housing and a lighting unit is inserted into the support part and at the same time snap-fitted therein. However, there the camera housing is introduced into the support part so that it is surrounded by the support part. Thereby the fixing of the camera in position is more difficult and these transitions are visible on the outside. Thus, dirt etc. may accumulate on these transitions.

From document DE 10 2020 210 278 A1 a household cooling appliance is known, which comprises a camera arranged by a snap-fit connection on the support part.

It is the object of the present invention to provide a household device, in which the arrangement of a camera on a support part is improved by a snap-fit connection. Equally a method is to be provided.

This object is solved by a household appliance and a method according to the independent claims.

One aspect of the invention relates to a household appliance comprising a housing, in which at least one receiving space for food is configured. The household appliance moreover comprises a door, which is movably arranged on the housing. Moreover, the household appliance comprises a camera.

The camera comprises a camera housing. Moreover, the household appliance comprises a support part comprising a mounting socket. The support part can be described as reinforcement part, too. This mounting socket is connected to the camera housing by a snap-fit connection. It is of the essence that the mounting socket on an outer side comprises at least one snap-fit element. The camera housing on an inner side comprises at least one counter-snap element. In the mounted state the mounting socket is received in the camera housing. The snap-fit element is snap-fitted with the counter-snap element for creating the snap-fit connection. By such a specific arrangement between the mounting socket and the camera housing, in which the camera housing quasi surrounds the mounting socket and the snap-fit connection is arranged to be internally positioned, the mechanically stable connection between the two components may be improved. Moreover, the snap-fit connection is arranged to be protected. Movement tolerances between the components may thereby be reduced.

In an embodiment in the mounted state the mounting socket is completely received in the interior of the camera housing. The protected position of the snap-fit connection is thereby once again improved. Moreover, the mounting socket in the mounted state is not visible to the outside. Thus, the camera housing completely covers the mounting socket. Thereby, the mounting socket is arranged equally protected. Also, thus, the complete stable positioning of the camera housing on the mounting socket is improved. Also, the mounting socket thereby is better protected by the camera housing also in the opposite direction.

In an embodiment the mounting socket on its shell side is completely surrounded by the camera housing. Thus, viewed in the direction of a socket axis the mounting socket, which is a longitudinal axis of the mounting socket, the mounting socket may plunge into the camera housing. In the circumferential direction around this longitudinal axis the mounting socket is thus completely covered by the camera housing towards the outside. Such a complete external surrounding of the mounting socket by the camera housing in this direction supports the above-named advantages once more.

In an embodiment the snap-fit connection is configured to be completely internally positioned in the interior of the camera housing. In particular, thus it is also achieved that an undesired releasing of the snap-fit connection occurs.

In an embodiment, the mounting socket is connected to a support plate. The support plate may be a support flange. Same may be configured to be annular. The support flange according to its intended purpose is provided for resting against a wall of the inner liner, in particular an outer side of a wall of an inner liner of a household cooling appliance provided in the embodiment. By such a support plate or a support flange, respectively, the positioning of the mounting socket on this wall that is separate therefrom is improved. In particular, it is thereby also achieved that an increased contact surface for the mounting socket on this wall is achieved. Mechanically more stable fastenings as well as an arrangement in a more precise position are thereby facilitated.

In an embodiment, the support plate and the mounting socket are configured to be integrally formed. Thus, the number of components of the mounting socket may be reduced. Also mounting effort and position tolerances may thereby be avoided, since these two components invariably remain in the same position relative to each other.

In an embodiment, the mounting socket is configured to be hollow at least in part. It is in particular configured to be tube-like. Thereby, the weight of the mounting socket may be reduced. Nevertheless, its stability is high. Thus, both coupling forces with the camera housing as well as lever forces acting upon the mounting socket in the mounted state through the camera housing can be easily absorbed. The camera housing may be arranged to be freely cantilevering.

In an embodiment, the snap-fit element is integrated in a wall of the mounting socket. Thus, the snap-fit element is integrally formed with this wall.

It may be envisaged that the snap-fit element is arranged in fixed position on the wall. In another embodiment, it may also be configured to be slightly resilient. It may be integral part of a spring shackle.

In an embodiment, the snap-fit element is configured to be slope-like. Thus, a start-up slope may be provided, by which a highly continuous mounting process, in particular a attachment process of the camera housing onto the mounting socket is facilitated. If this slope of the snap-fit element is overcome by the counter-snap element in the axial direction of the mounting direction, the counter-snap element is snap-fitted on the snap-fit element.

In an embodiment, the mounting socket comprises a ceiling wall. In same a first snap-fit element is configured to be integrated. The mounting socket in particular comprises a bottom wall. In same in particular a second snap-fit element is configured to be integrated. The camera housing preferably comprises a ceiling wall, in which a first counter-snap element is configured to be integrated. The camera housing preferably comprises a bottom wall, in which a second counter-snap element is configured to be integrated. In the mounted state between the first snap-fit element and the first counter-snap element a first snap-fit connection is configured. Between the second snap-fit element and the second counter-snap element then a second snap-fit connection is configured. By such an, in particular at least one top snap-fit connection and at least one further bottom snap-fit connection that is separate therefrom and different in terms of location the fastening concept with only snap-fit connections is configured particularly advantageously. This is because thus fixing the camera housing in position on the mounting socket is improved.

In particular the camera housing and the mounting socket are only coupled by snap-fit connections to each other. Further fastening elements, such as for instance screws or the like, are not provided. Also, this is particularly advantageously facilitated by the camera housing being externally positioned and the mounting socket being arranged in the interior of the at least in part hollow camera housing.

In an embodiment, the mounting socket comprises a tapering front portion. Also thereby the inserting of the camera housing is supported. A jam-free and initially at the beginning of the insertion inaccurately positioned arranging of the camera housing relative to the mounting socket is thereby facilitated. By this front portion, which tapers towards the front towards its free end, also a guiding for the camera housing is facilitated, when this camera housing is slid onto the mounting socket. Thus, in this mounting process and when axially sliding the camera housing onto the mounting socket also a self-alignment of the two components relative to one another is achieved by the tapering front portion.

In an embodiment, a first electrical plug connector is disposed in an interior of the support part and a second electrical plug connector is disposed inside an interior of the camera housing, wherein the second electrical plug connector is configured for connection to the first electrical plug connector. The first and second electrical plug connectors are separate component and completely disposed inside the interior, especially housing duct, of the support part and interior, especially housing duct, of the camera housing. This first electrical plug connector may be fastened, e. g. by way of a force-fit, form-fit, and/or snap-fit connection, inside the interior of the support part and the second electrical plug connector may be fastened, e. g. by way of a force-fit, form-fit, and/or snap-fit connection, inside the housing duct of the camera housing. The first electrical plug connection may have first snap-fit element, e.g. hook or lug, which is configured to be directly connected to a second snap-fit element, e.g. hook or lug, of the second electrical plug connection. In this way, the second electrical plug connector may be connected to the first electrical plug connector directly by way of a further snap-fit connection and thus snap-fitted thereto in the mounted state. The plug connectors are connected to one another individually, namely by way of the further snap-fit connection. As a result, a simple mounting concept can be achieved. The two plug connectors are then also held together in a mechanically stable and precisely positioned manner. A snap-fit connection of this type, in which the two electrical plug connectors are further directly snap-fitted to one another, can be produced quickly, easily and expediently, and on the other hand can also be released again easily. As a result, when the camera and the support part are joined together mechanically, the mechanical and thus also the electrical connection between the two plug connectors is then achieved automatically in a particularly simple manner. A mounting effort, in particular a positioning and cabling effort for the individual plug connectors, in particular after the mounting of the camera on the reinforcement part, is thus significantly reduced. The proposed concept thus also makes it possible for the camera to be joined effectively blindly to the support part and in this regard for the two electrical plug connectors to be plugged together automatically, also effectively without sight, during this joining process. As a result, no separate, additional work step is required in order to join the two plug connectors together.

In an embodiment, the support part comprises a support structure that is different from the mounting socket. By same the support part is supported in a clearance between the inner wall and an outer wall of a household appliance component, for instance the door. Thus, a further advantageous fixing of the mounting socket in position is achieved. This is because the mounting socket may be fastened to rest against two different walls of the door. Especially in the case of a door of a household cooling appliance, which is also thermally insulating, and in which thermally insulating material is inserted between the inner wall and the outer wall, thus this positioning of the mounting socket is improved once again. This is particularly advantageous, when in the concept suggested above the mounting socket protrudes through the opening in the at least one wall to then be capable of being connected to the camera housing on the other side of the wall. Since preferably the mounting socket in this regard has to be dimensioned smaller, in particular with its at least one snap-fit element, in order to be able to be passed through this opening, in the end position of the mounting socket on the wall, in particular the inner wall, there is also a certain tolerance between the mounting socket and the bounding edge of this opening. Thus, at least in theory, a certain relative movement of the mounting socket of the support part may be effected relative to this opening. Due to the support structure this may be avoided, since also when the camera housing is not yet fastened to the mounting socket and the mounting socket or the support part, respectively, is already arranged in the mounted end position, a fixing in position is achieved. This is because this is in particular achieved by the support structure, which rests against two different components, namely the inner wall and the outer wall.

In an embodiment the support structure rests against an inner side of the outer wall which faces the clearance. Moreover, in an embodiment the support plate already named above, in particular the support flange, rests against an outer side of the inner wall. Thus, on the one hand, by the support plate, on the other hand, by the support structure, a resting of the support part against two different walls at the same time is achieved. In particular, by the support structure the clearance across its entire inner width is bridged so that the support structure together with the support plate extends across this entire inner width between the outer side of the inner wall and the inner side of the outer wall. Thus, the support structure with the support plate in an embodiment, to a certain extent, is also arranged to be straddled or slightly wedged between these two sides.

It is possible that the support structure on the inner side of the outer wall is fastened thereto by an adhesive bond, in particular by a double-sided adhesive tape. In an embodiment, it is possible that the support plate by an adhesive bond, in particular a double-sided adhesive tape, is fastened to the outer side of the inner wall. Such adhesive bonds are fast and easy to manufacture and still allow for highly accurate fixing in position of the named components relative to each other. In particular this holding is also sustained if subsequently during the manufacturing process thermally insulating material, such as for instance also thermal insulation foam, is introduced into the clearance. Then, too, the support structure and thus also the support part remain in the fixed position.

In an embodiment, the support structure is configured to be basket-like. In particular it is configured as basket structure widening towards the outer wall. Such a basket structure, which thus also represents a bar structure or a framework structure, on the one hand, is inherently mechanically stable, on the other hand, configured with low weight. Particularly advantageous is such a very permeable support structure if as thermally insulating material insulation foam is introduced. This is because then this insulation foam upon introduction may also completely penetrate the support structure and also preferably fill the entire area relatively void-free.

A further aspect of the invention relates to a method for manufacturing a household appliance component, in particular a door, for a household appliance, in particular a household cooling appliance, comprising the following steps:
- mounting a support part on an inner wall of the household appliance component so that a mounting socket of the support part protrudes through an opening in the inner wall;
- sliding a camera housing of a camera onto the mounting socket so that the camera housing receives the mounting socket in the interior and in the end position of the camera housing at least one snap-fit element of the mounting socket is snap-fitted with at least one counter-snap element of the camera housing and thereby a snap-fit connection located in the interior of the camera housing is created; and/or
- attaching an outer wall of the housing appliance component so that a clearance between the inner wall and the outer wall is formed, wherein by attaching the outer wall a support structure of the support part is arranged in the clearance and the support structure is brought into mechanical contact with the outer wall and rests against it.

In an embodiment of the method, it is envisaged that an outer wall is provided. This outer wall may be an outer wall of a door of the household appliance, in particular of a household cooling appliance. On an inner side of this outer wall this support part is attached with the support structure, in particular directly, preferably with a double-sided adhesive tape, glued thereon. Further, then the inner wall provided separately therefrom is then moved towards the outer wall, for instance swiveled open from its mounting deposit position onto the outer wall. Therein, the mounting socket is passed through the opening in the inner wall and the support plate of the support part rests against the outer side of the inner wall. In particular here also by a double-sided adhesive tape then automatically an adhesive bond is created between the support plate and the outer side of the inner wall.

In the camera housing an image capture unit and a lighting unit of the household appliance may be arranged. The lighting unit is configured for long-term lighting of the surroundings of the camera.

In an embodiment, the lighting unit comprises at least one light source. The lighting unit comprises at least one optically effective element, in particular a lens. The lens is in particular positioned in the beam path of the light source. Thus, the light of the light source may also be directed in a targeted way through this lens. The light source may be at least one light-emitting diode. These may also be several light-emitting diodes.

In an embodiment, the lighting unit may also comprise an image projector. Thus, it is then also facilitated to not only emit simple light, but also to represent image information. Accordingly, these may be images of the most varied objects or other items.

In an embodiment the household appliance comprises a door position recognition unit. According to the intended purpose this is provided for capturing the position of the door of the household appliance. It may be envisaged that the door position recognition unit also comprises a control unit. Depending on the recognized door position, the lighting unit may then automatically be activated or deactivated. This may then be effected in a controlled way via the control unit. In particular it is envisaged that the lighting unit is deactivated in the closed state of the door. If the door is opened, the lighting unit is automatically activated. It may then light up permanently and without interruption for as long as the door is open. If the door is closed again, the lighting unit is deactivated automatically again. Thus, an energy-efficient operation of the lighting unit may be effected. Moreover, it is avoided that the lighting unit continues to be active also in the closed state of the door. Especially in the case of household cooling appliances it is thereby avoided that an undesired heat input into a cooling compartment or a freezer compartment occurs, if the lighting unit also were lighting up in the closed state of the door.

The door position recognition unit may comprise one or several sensors, by which the door position may be captured. For instance, this may be at least one magneto-resistive sensor. Also a mechanical sensor may be provided. Equally, however, also capacitive or inductive proximity sensors or else also an acceleration sensor may be provided.

The camera housing preferably comprises a housing duct and a front part.

In an embodiment the front part comprises a front wall. In this front wall a first, transparent window or viewing window, respectively, is configured, through which light is hitting the image capture unit from outside the camera. In an embodiment the front wall comprises a second transparent window that is separate from the first transparent window, through which the light of the flash light unit exits towards the outside. By this separation of the two windows undesired light impairments may be avoided. The direct incidence of the flash light towards the image-capturing unit may be avoided by this window separation.

In an embodiment the camera housing of the camera comprises a front part that is separate from the housing duct. In an embodiment, this housing duct is connected to the front part by at least one snap-fit connection. Such a specific non-destructively releasable mechanical connection is easy to produce. It may then also be easily released for maintenance purposes, if required. By the housing being composed of two separate components, the mounting of individual components of the camera in the housing duct, on the one hand, in the front part, on the other hand, may be effected in a more individual and improved manner. Thus, also more exact positions of the individual components in the two parts of the housing can be achieved in an improved way. Not least, thus then also the accessibility to the individual components, which are installed in these two housing parts, is improved.

In an embodiment, the housing duct is configured to be straight and tube-like. In particular in this connection it may be a rectangular tube. The housing duct with regard to its basic geometry in the embodiment is symmetrical to a plane, which is configured to extend perpendicularly to the longitudinal axis of the housing duct. In this regard, thus, the opposite ends of the housing shaft may be configured to be equal in size. By such a design, on the one hand, a relatively simple housing part is created, which can, however, receive corresponding components, on the other hand, and facilitates a mechanically stable connection with camera-external components. On the other hand, it is also configured to be correspondingly mechanically stable and resilient. Thereby, in an embodiment, also a further coupling with housing parts of the camera may be easily effected. This may for instance be a separate front part and/or in a further embodiment an additional separate arc segment of the housing of the camera. This also makes it easy to provide a correspondingly high number of variants for the design of various camera types.

In an embodiment, the housing duct is configured to be made of plastic. For instance this may be an injection-molded part.

In an embodiment, the camera housing of the camera comprises a separate, hollow arc segment. In an embodiment, viewed in the direction of the longitudinal axis of the housing, this is arranged between the front part, on the one hand, and the housing duct, on the other hand. The arc segment is in particular configured as angle position adapter for the front part. The arc segment is non-destructively releasably connected to the front part, on the one hand, and the housing duct, on the other hand. The complete housing is then formed by the parts that are arranged in series relative to one another comprising the housing duct, the arc segment, and the front part. By this arc segment thus a specific orientation of the capturing range of the image-capturing module can be adjusted. In this embodiment, it is then facilitated by the arc segment that a main axis of the capture range of the image capture module is oriented at an angle to the longitudinal axis of the housing duct. This angle is larger than 0° and smaller than 180°. In particular, it may be between 100° and 170°.

The named housing parts are in particular outer parts and as such visible components.

This arrangement with the camera and the support part can thus be arranged on a wall of an inner liner of the household cooling appliance. The wall of the household cooling appliance, however, may then also be for instance integral part of a door of the household cooling appliance. For instance this may be the inner liner of the door. This is an example of an inner part. The inner liner in the closed state of the door is facing the receiving space of the household cooling appliance. Also, this inner lining is a visible component of the door. Also, thereby a clearance between an outer cladding as example of an outer part and an inner liner of the door may be bounded. Also in this clearance thermally insulated material may be introduced.

Advantageous embodiments of the household appliance are to be considered as advantageous embodiments of the method. In this regard, the individual components of the camera are suited for facilitating the corresponding steps in the mounting of the camera. For this purpose, individual components may comprise corresponding auxiliary means for performing the mounting steps and/or several components of the camera in effective connection with one another for facilitating the mounting scenario.

By the indications "top", "bottom", "front", "back", "horizontal", "vertical", "depth direction", "width direction", "height direction" the positions and orientations given in the case of use according to the intended purpose and positioning according to the intended purpose are indicated.

Further features of the invention derive from the claims, the figures, and the description of the figures. The features and feature combinations previously named in the description, as well as the features and feature combinations named in the following in the description of the figures and/or shown in the figures alone can be used not only in the respectively indicated combination, but also in other combinations or alone, without leaving the scope of the invention. Thus, also implementations of the invention are to be considered as comprised and disclosed, which are not explicitly shown and explained in the figures, however derive from separated feature combinations from the explained implementations and can be generated from them. Also explanations and feature combinations are to be regarded as disclosed, which thus do not comprise all features of an originally formulated independent claim.

Embodiments of the invention are explained in more detail in the following by reference to schematic drawings. These show in:
- Fig. 1: a schematic representation of an embodiment of a household appliance;
- Fig. 2a: an exploded view of an arrangement comprising a camera and a support part;
- Fig. 2b: a perspective view of an embodiment of a support part;
- Fig. 2c: a further exploded view of an arrangement comprising a camera and a support part;
- Fig. 2d: a perspective cross section view of an exploded view of an arrangement comprising a camera and a support part;
- Fig. 2e: a cross section view of parts of the arrangement of fig. 2d;
- Fig. 3: a partial view of the components of the arrangement according to Fig. 2;
- Fig. 4: a perspective view, in which the camera is fastened to a mounting socket of the support part by snap-fit connections;
- Fig. 5: a perspective view of an embodiment of a support part comprising a support structure and a mounting socket;
- Fig. 6: a perspective view of a mounted end state of the support part on an outer wall and an inner wall and of a mounted end state of the camera on the support part;
- Fig. 7: a schematic representation of an intermediate mounting state for mounting a household appliance component of a household appliance; and
- Fig. 8: a further intermediate mounting state following the intermediate mounting state in Fig. 7.

In the figures identical or functionally identical elements are equipped with the same reference signs.

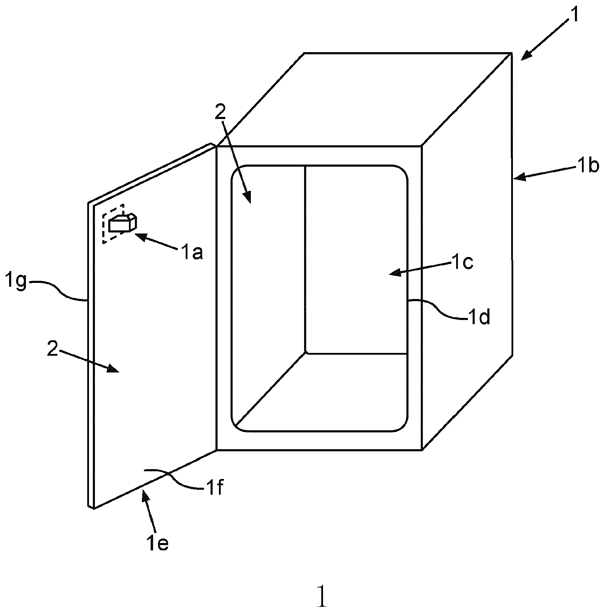

In fig. 1 in a schematic representation a household appliance is shown, which here is a household cooling appliance 1 as an household apllicance. The household cooling appliance 1 comprises an arrangement 1a. The household cooling appliance 1 comprises a housing 1b. Therein a receiving space 1c for receiving food is configured. The receiving space 1c may be a cooling compartment or a freezer compartment. The receiving space 1c is bounded by walls of an inner liner 1d of the household cooling appliance 1. The household cooling appliance 1 moreover comprises a door 1e. Same is swivably arranged on the housing 1b for closing the receiving space 1c. The door 1e comprises a wall 1f, which is an inner liner.

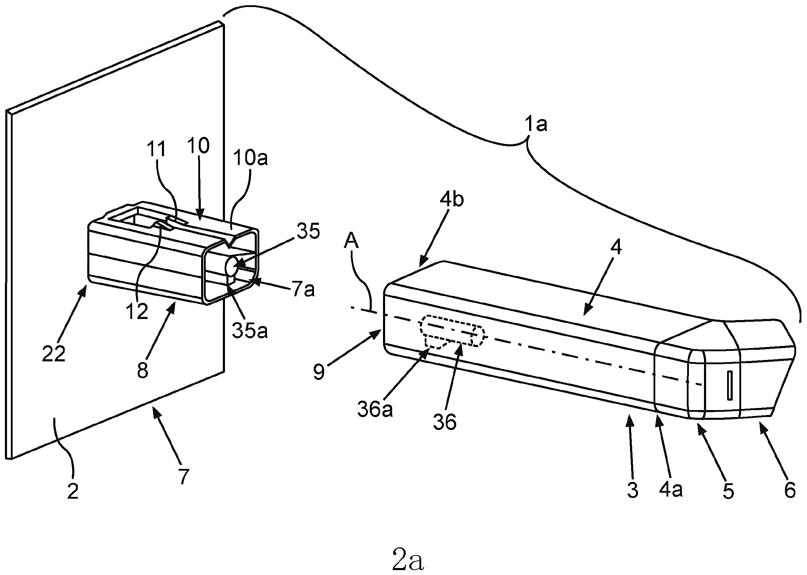

In fig. 2a in an exploded view an embodiment of an arrangement 1a is shown. The arrangement 1a is configured for being mounted on at least one wall 2 of the household appliance, in particular the household cooling appliance 1.

In particular the mounting, viewed in general, is envisaged to be performed on a wall structure with a first wall and a second wall that is separate therefrom. The wall structure may be formed by an inner wall and an adjacent, but spaced apart outer wall.

The wall 2 may be the wall 1f or may be a wall of the inner liner 1d. The arrangement 1a comprises a camera 3. The camera 3 comprises a camera housing. The camera housing is here for instance configured to be made of several parts. It comprises in an embodiment an oblong, straight housing duct 4 or a housing channel, respectively. Moreover, the camera housing in the embodiment comprises an arc segment 5. The arc segment 5 is configured for assembly with the housing duct 4. In particular here a snap-fit connection is provided. The oblong housing duct 4 comprises a longitudinal axis A. On an end 4a of the housing duct 4 that faces away from the wall 2 the connection to the arc segment 5 is provided. In the cross-section this oblong housing duct 4 is of a rectangular design. However, it may also have a different shape design. As may be discerned, the housing duct 4 on a rear end 4b, which in the mounted state faces the wall 2, is configured for mounting on a support part 6.

The camera 3 may be arranged on the door 1e of the household cooling appliance 1. However, it may also be arranged on the inner liner 1d bounding the receiving space 1c for food. By the camera 3 the receiving space 1c is to be captured.

The camera 3 in the embodiment also comprises a front part 6.

The arrangement 1a further comprises a support part 7. The support part 7 is separate from the camera 3. The support part 7 in the embodiment is an integrally formed component. It may in particular be configured to be made of plastic. Here, the support part 7 is arranged at the wall 2 such that only a mounting socket 8 can be seen.

In fig. 2a the support part 7 comprises a mounting socket 8. This mounting socket 8 is of a socket-shaped design. It may be configured to be hollow in part. The mounting socket 8 preferably comprises a shape design which is also configured for accurately fitting insertion into an interior 9 of the camera housing, in particular of the housing duct 4. This also means that the housing duct 4 is larger than the mounting socket 8 so that the mounting socket 8 in the mounted state may plunge into the interior 9. In particular then in the mounted state the housing duct 4 surrounds this mounting socket 8. In particular in the circumferential direction around the longitudinal axis A the mounting socket 8 then is completely surrounded by the housing duct 4.

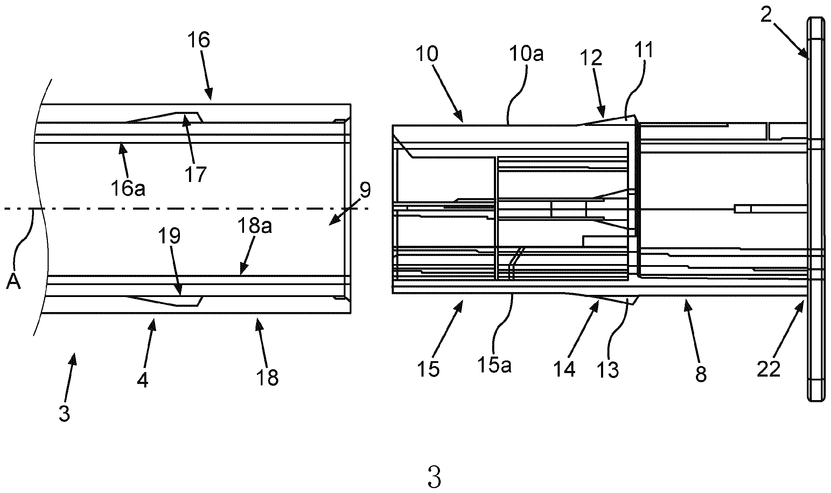

The mounting socket 8 comprises a ceiling wall 10. On this ceiling wall 10 in the embodiment at least one snap-fit element 11, in particular two snap-fit elements 11 and 12, are integrally formed. It is also possible that additionally on a bottom wall 15 (fig. 3) of the mounting socket 8 at least one further snap-fit element, preferably two further snap-fit elements 13 and 14 are integrally formed.

These snap-fit elements 11 and 12 in this regard are configured on an outer side 10a, here a top side, of this ceiling wall 10. In particular the snap-fit elements 13 and 14 are configured on an outer side 15a, here a bottom side, of the bottom wall 15 of the mounting socket 8.

In fig. 2a, a first electrical plug connector 35 is disposed in an interior 7a of the support part 7 and a second electrical plug connector 36 is disposed inside an interior 9 of the camera housing, wherein the second electrical plug connector 36 is configured for connection to the first electrical plug connector 35. The first 35 and second electrical plug connectors 36 are separate component and completely disposed inside the interior 7a of the support part 7 and interior 9 of the camera housing. The first electrical plug connector 35 may be fastened, e. g. by way of a force-fit, form-fit, and/or snap-fit connection, inside the interior, especially the housing duct, of the support part and the second electrical plug connector 36 may be fastened, e. g. by way of a force-fit, form-fit, and/or snap-fit connection, inside the interior, especially housing duct 4, of the camera housing. The first electrical plug connection 35 may have first snap-fit element 35a, e.g. a hook or lug, which is configured to be directly connected to a second snap-fit element 36a, e. g. a hook or lug, of the second electrical plug connection 36. In this way, the second electrical plug connector 36 may be further connected to the first electrical plug connector 35 directly by way of a further snap-fit connection 35a, 36a and thus snap-fitted thereto in the mounted state. The plug connectors 35, 36 are connected to one another individually, namely by way of the further snap-fit connection 35a, 36a.

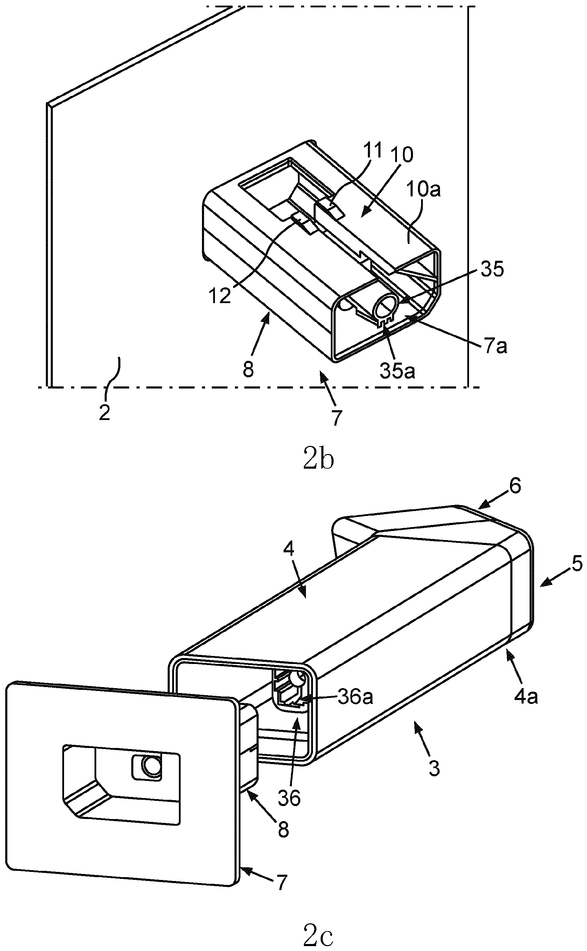

In fig. 2b a perspective view of an embodiment of a support part 7 is shown. The first electrical plug connector 35 and the first snap-fit element 35a are shown.

In fig. 2c a further exploded view of an arrangement comprising the camera 3 and a support part 7 is shown. The second electrical plug connector 36 and the second snap-fit element 36a are shown.

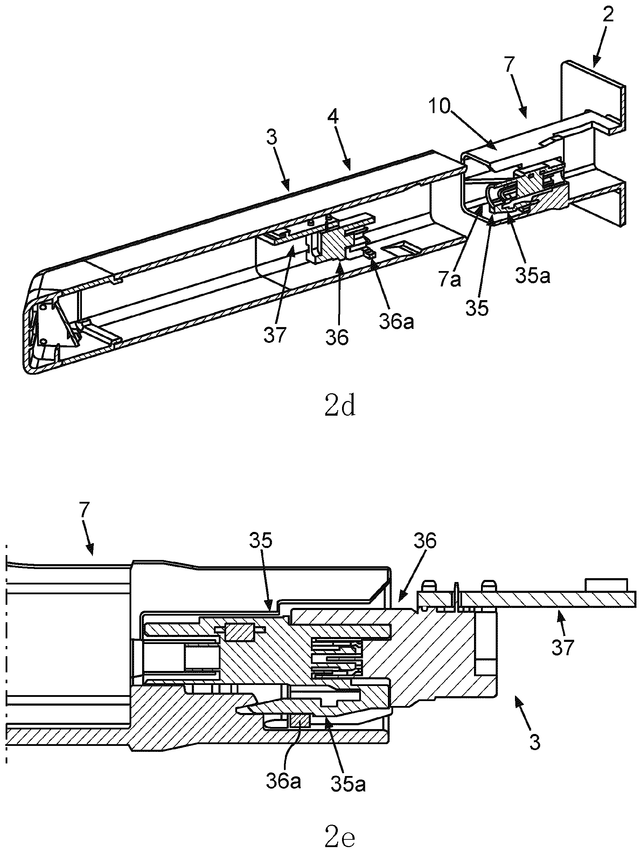

In fig. 2d a perspective cross section view of an exploded view of an arrangement comprising the camera 3 and the support part 7 is shown. The position and the orientation and geometries of the snap-fit elements 35a and 36a are demonstrated as examples.

In fig. 2e a cross section view of parts of the arrangement of fig. 2d in a coupled state are shown. A circuit board 37 arranged within the camera 3 and connected to the second connector 36 is shown. The snap-fit elements 35a and 36a are in snap-fitted arrangement. The view in fig. 2e is in direction to the other half side of the arrangement in fig. 2d, wherein for this situation the camera 3 is on the right side and the support part 7 is on the left side. Further the housing duct 4 is not shown in fig. 2e.

As it can be seen in fig. 2d and 2e the second snap-fit element 36a is a block like element in this embodiment. The first snap-fit element 35a is a cantilevered element and/or especially a springy element.

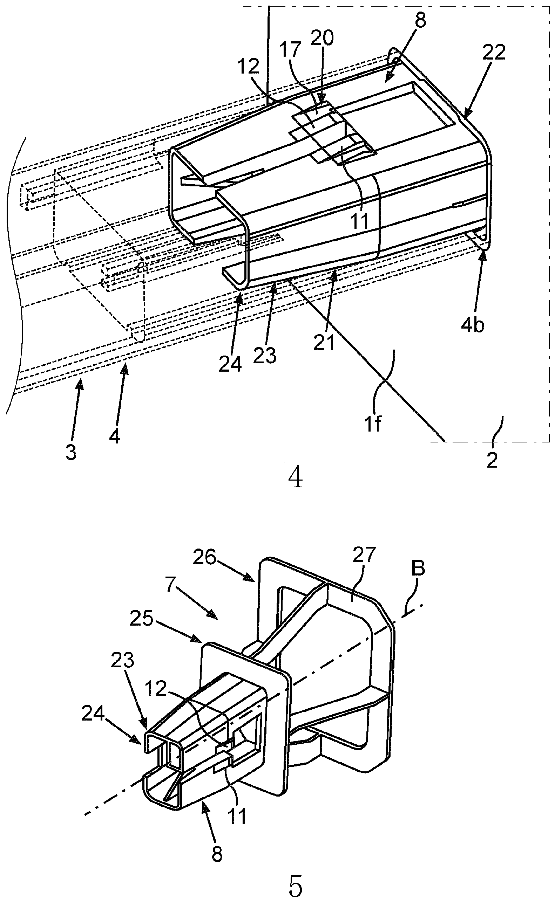

As may moreover be discerned in fig. 4, the camera housing, in particular the housing duct 4, comprises a ceiling wall 16. On an inner side 16a a counter-snap element 17 is configured. In particular this is a snap-fit element receptacle. Moreover, the housing duct 4 comprises a bottom wall 18. In particular on an inner side 18a of this bottom wall 18 a further counter-snap element 19 is configured. This, too, is a snap-fit element receptacle. It is envisaged that in the mounted state the snap-fit elements 11 and 12 are snap-fitted into the counter-snap element 17 and the snap-fit elements 13 and 14 into the counter-snap element 19.

In particular the mechanical coupling between the camera housing, in particular the housing duct 4, and the mounting socket 8 is held only by these snap-fit connections 20 and 21 (fig. 4).

As can be discerned in fig. 2 and fig. 3, the wall 2 comprises an opening 22. Through this opening 22 extends the mounting socket 8. Thus, the support part 7 is arranged on both sides of this opening 22. In the mounted end state of the housing duct 4 on the mounting socket 8, as it is shown in fig. 4, the mounting socket 8 is completely received in the interior 9 of the camera housing. The mounting socket 8 on its shell side is completely surrounded by the camera housing, in particular the housing duct 4. As may be moreover discerned in fig. 4, the snap-fit connections 20 and 21 are configured to be completely internally positioned in the interior 9 of the camera housing. They are therefore not uncovered towards the outside. In the embodiment in fig. 4 in contrast to the examples in fig. 2 and fig. 3 it is envisaged that the mounting socket 8 comprises a tapering front portion 23. The front portion 23 thus tapers towards a free front end 24.

The slope-like shape of the snap-fit elements 11 and 12 may also be discerned in fig. 4.

The mounting socket 8 in the embodiment in fig. 4 is also configured to be hollow at least in part, as this is already shown for the embodiments in fig. 2 and fig. 3.

In fig. 5 in a perspective view an embodiment of an integrally formed support part 7 is shown. In this embodiment the support part 7 comprises a support plate 25. This is here configured as circumferential, in particular annular, support flange. In the direction of a longitudinal axis B of the support part 7 this support plate 25 directly adjoins the mounting socket 8. Moreover, the support part 7 in the shown embodiment in fig. 5 comprises a support structure 26. Same directly adjoins the support plate 25 towards the rear. The support structure 26 is here of a bar-like design. Starting from the support plate 25 towards the rear and thus facing away from the mounting socket 8 it is configured to be widening. The support structure 26 in the example is configured as basket structure. In particular, it comprises a rear contact flange 27 forming the end of the support structure 26. Same is here of an annular design.

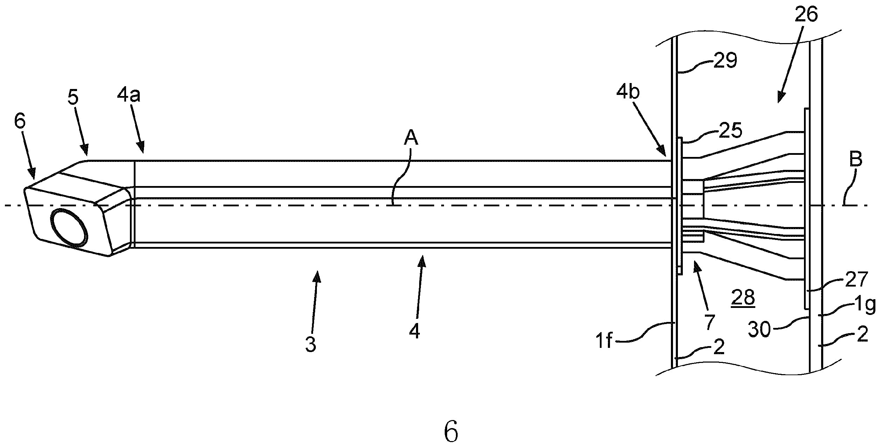

In fig. 6 in a perspective view a mounted end state is shown, in which the support part 7 is mounted and the camera 3 is equally mounted on the support part 7. As may be discerned here, the support part 7 with the support structure 26 is arranged in a clearance 28. This clearance 28 is bounded by two walls 2 of the wall structure. Therein, one of the walls 2 may be the inner wall 1f. The other wall 2 may be an outer wall 1g. In the clearance 28 a thermally insulated material may be inserted. This is in particular the case if this structure is integral part of a household cooling appliance.

As may be discerned, the support plate 25 rests against an outer side 29 of the wall 1f, which is an inner wall. Moreover, the support structure 26, in particular with the rear contact flange 27 rests against an inner side 30 of the outer wall 1g. In particular here respective adhesive bonds, such as for instance a double-sided adhesive tape, are provided in each case. As may be discerned in Fig. 6, the support structure 26 extends across the entire inner width of the clearance 28 so that by the support structure 26 and the support plate 25, which may also be regarded as integral part of the support structure 26 in an example, also a positioning structure, which makes contact on both sides, is configured. Moreover, it may also be discerned that the camera housing, in particular the housing duct 4 has completely received the mounting socket 8. It may be that the rear end 4b also rests against the wall 2, in particular the inner wall 1f.

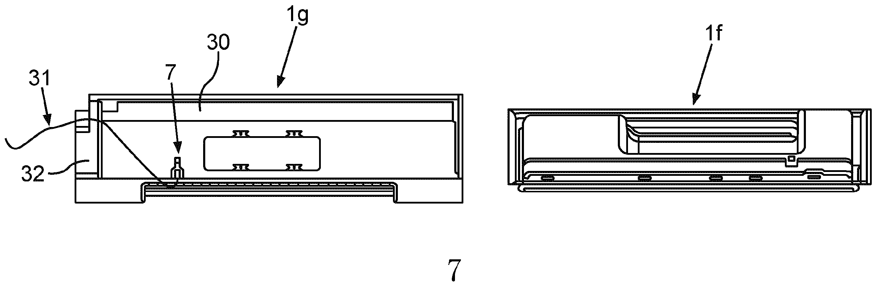

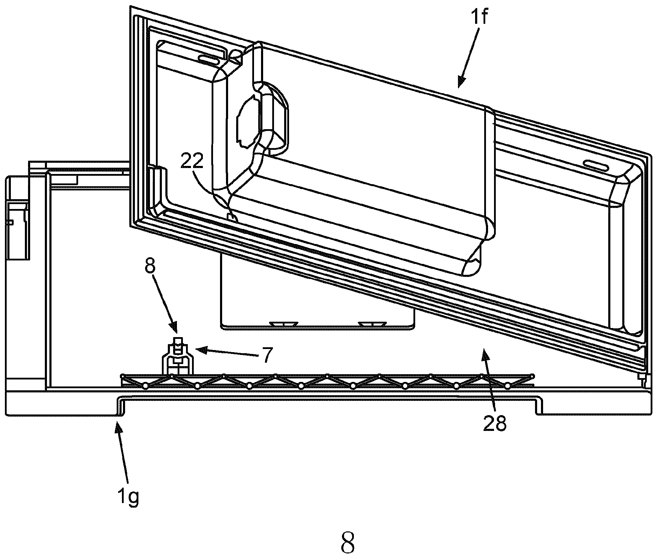

In fig. 7 in a schematic representation an intermediate mounting step for mounting a household appliance component of the household appliance 1, here in particular the door 1e, is shown. For this purpose, here the outer wall 1b is provided. On the inner side 30 the support part 7 is fastened, in particular by the adhesive bond. In this connection, the contact flange 27 is glued to the inner side 30 by a double-sided adhesive tape. The equally provided wall 2, which here represents the inner wall 1f, in the following is applied to the outer wall 1b. This may for instance also be effected by a swiveling, as it is shown in fig. 8 in a further mounting intermediate state. This applying of the inner wall 1f to the outer wall 1g is effected long enough for the clearance 28 to be also formed. Moreover, then the mounting socket 8 of the support part 7 is passed through the opening 22 and the support plate 25 then directly rests against the outer side 29. The double-sided adhesive tape, which has in particular been applied to the support plate 25 in advance, then creates an adhesive bond with the outer side 29.

In a further manufacturing step, which is not shown, then thermally insulating material is introduced into the clearance 28. Preferably, the above-named snap-fit connections 20 and 21 are conceived in such a way that upon pulling the mounted camera 3 in the direction of the longitudinal axis A away from the mounting socket 8, whilst overcoming a predetermined force threshold value, these snap-fit connections 20, 21 may be automatically released. This force threshold value, however, is large enough so that by simple slight pulling of the camera 3 or by a minor exertion of force when hitting the camera 3, this release of the snap-fit connections 20 and 21 does not yet occur.

In the representation in fig. 6, in an embodiment, additionally it may also be envisaged that the cable 31 is guided to an upper door end part 32 of the door 1e, wherein these cables 31 lead to the support part 7.

In an embodiment it is also possible that the camera housing, in particular the housing duct 4, with its rear end 4b in part plunges into a funnel-like receptacle, which encircles the opening 22 in a boundary manner. Thus, a further fixing of the housing duct 4 in position, in particular then also additionally on the wall 2, is performed. The rear end 4b thus minimally plunges into the inner wall 1f.

### List of Reference Signs

- 1: household appliance
- 1a: arrangement
- 1b: housing
- 1c: receiving space
- 1d: inner liner
- 1e: door
- 1f: inner wall
- 1g: outer wall
- 2: wall
- 3: camera
- 4: housing duct
- 4a: front end
- 4b: rear end
- 5: arc segment
- 6: front part
- 7: support part
- 7a: interior
- 8: mounting socket
- 9: interior
- 10: ceiling wall
- 10a: outer side
- 11: snap-fit element
- 12: snap-fit element
- 13: snap-fit element
- 14: snap-fit element
- 15: bottom wall
- 15a: outer side
- 16: ceiling wall
- 16a: inner side
- 17: counter-snap element
- 18: bottom wall
- 18a: inner side
- 19: counter-snap element
- 20: snap-fit connections
- 22: opening
- 23: front portion
- 24: end
- 25: support plate
- 26: support structure
- 27: contact flange
- 28: clearance
- 29: outer side
- 30: inner side
- 31: cable
- 32: door end part
- 35: first electrical plug connector
- 35a: first snap-fit element
- 36: second electrical plug connector
- 36a: second snap-fit element
- 37: circuit board
- x: width direction
- y: height direction
- A: longitudinal axis

## Claims

1. Household appliance (1), comprising a housing (1b), in which at least one receiving space (1c) for food is configured, with a door (1e), which is movably arranged on the housing (1b), and comprising a camera (3), wherein the camera (3) comprises a camera housing (4, 5, 6), and comprising a support part (7), which comprises a mounting socket (8), which is connected to the camera housing (4, 5, 6) by a snap-fit connection (20, 21), **characterized in that** the mounting socket (8) on an outer side (10a, 15a) comprises at least one snap-fit element (11, 12) and the camera housing (4, 5, 6) on an inner side (16a, 18a) comprises a counter-snap element (17, 19), wherein in the mounted state the mounting socket (8) is received in the camera housing (4, 5, 6) and the snap-fit element (11, 12) for creating the snap-fit connection (20, 21) is snap-fitted with the counter-snap element (17, 19).

2. Household appliance (1) according to claim 1, **characterized in that** in the mounted state the mounting socket (8) is completely received in the interior (9) of the camera housing (4, 5, 6).

3. Household appliance (1) according to claim 1 or 2, **characterized in that** the mounting socket (8) on its shell side is completely surrounded by the camera housing (4, 5, 6).

4. Household appliance (1) according to any one of the preceding claims, **characterized in that** the snap-fit connection (20, 21) is configured to be completely internally positioned and covered towards the outside in the interior (9) of the camera housing (4, 5, 6).

5. Household appliance (1) according to any one of the preceding claims, **characterized in that** the mounting socket (8) is connected to a support plate (25) of the support part (7).

6. Household appliance (1) according to claim 5, **characterized in that** the support plate (25) and the mounting socket (8) are integrally formed.

7. Household appliance (1) according to any one of the preceding claims, **characterized in that** the mounting socket (8) is configured to be at least in part hollow, in particular tube-like.

8. Household appliance (1) according to any one of the preceding claims, **characterized in that** the snap-fit element (11, 12, 13, 14) is integrated in a wall (10, 15) of the mounting socket (8).

9. Household appliance (1) according to claim 8, **characterized in that** the snap-fit element (11, 12, 13, 14) is configured to comprise a slope.

10. Household appliance (1) according to any one of the preceding claims, **characterized in that** the mounting socket (8) comprises a ceiling wall (10), in which a first snap-fit element (11, 12) is configured to be integrated, and comprises a bottom wall (15), in which a second snap-fit element (13, 14) is configured to be integrated, wherein the camera housing (4, 5, 6) comprises a ceiling wall (16), in which a first counter-snap element (17) is configured to be integrated and comprises a bottom wall (18), in which a second counter-snap element (19) is configured to be integrated, wherein in the mounted state between the first snap-fit element (11, 12) and the first counter-snap element (17) a first snap-fit connection (20) is configured and between the second snap-fit element (13, 14) and the second counter-snap element (19) a second snap-fit connection (21) is configured.

11. Household appliance (1) according to any one of the preceding claims, **characterized in that** the mounting socket (8) comprises a tapering front portion (23).

12. Household appliance (1) according to any one of the preceding claims, **characterized in that** the support part (7) comprises a support structure (26) that is different from the mounting socket (8), by which the support part (7) in a clearance (28) between an inner wall (1f) of a household appliance component, in particular the door (1e), and an outer wall (1g) of the household appliance component (1e) is supported.

13. Household appliance (1) according to claim 12, **characterized in that** the support structure (26) rests against an inner side (30) of the outer wall (1g) facing the clearance (28).

14. Household appliance (1) according to claim 12 or 13, **characterized in that** the support structure (26) is configured to be basket-like, in particular as basket structure widening towards the outer wall (1g).

15. Method for manufacturing a household appliance component, in particular a door (1e), for a household appliance (1), in particular a household cooling appliance, comprising the following steps:
- mounting a support part (7) on an inner wall (1e) of the household appliance component so that a mounting socket (8) of the support part (7) protrudes through a opening (22) in the inner wall (1e);
- sliding a camera housing (4, 5, 6) of a camera (3) onto the mounting base (8) so that the camera housing (4, 5, 6) receives the mounting socket (8) in the interior (9) and in the end position of the camera housing (4, 5, 6) at least one snap-fit element (11, 12, 13, 14) of the mounting socket (8) is snap-fitted with at least one counter-snap element (17, 19) of the camera housing (4, 5, 6) and thereby a snap-fit connection (20, 21) located in the interior (9) of the camera housing (4, 5, 6) is created; and/or
- attaching an outer wall (1g) of the household appliance component so that a clearance (28) is formed between the inner wall (1e) and the outer wall (1g), wherein by attaching the outer wall (1g) a support structure (26) of the support part (7) is arranged in the clearance (28) and the support structure (26) is brought into mechanical contact with an inner side (30) of the outer wall (1g) and rests against it.
